# EUROPÄISCHE PATENTSCHRIFT

(11) **EP 4 239 030 B1**
(45) Veröffentlichungstag und Bekanntmachung des Hinweises auf die Patenterteilung: **08.07.2026**
(21) Anmeldenummer: 23170429.7
(22) Anmeldetag: 24.02.2017
(51) Int. Cl.: C09D 5/00, C09D 5/02

(54) **DISPERSIONSFARBE**
DISPERSION PAINT
PEINTURE DISPERSION

(30) Priorität: 26.02.2016 DE 102016002221
(43) Veröffentlichungstag der Anmeldung: 06.09.2023
(62) Teilanmeldung aus: 17707304.6
(73) Patentinhaber: Brillux GmbH & Co. KG, 48163 Münster (DE)
(72) Erfinder: HÖRSTING, Ingo, 48317 Drensteinfurt (DE); LEUSMANN, Jan, 48301 Nottuln (DE)
(74) Vertreter: Cohausz & Florack

(56) Entgegenhaltungen:
- WO-A1-01/48098
- CH-A5- 618 462
- JP-A- 2005 336 357
- RU-C1- 2 142 975
- US-A1- 2013 170 014

## Beschreibung

Die vorliegende Erfindung betrifft eine Dispersionsfarbe, ein Verfahren zur Herstellung der Dispersionsfarbe, die Verwendung der Dispersionsfarbe sowie die Verwendung von Alkalimetallalkylsilikonaten zur Stabiliserung von Dispersionsfarben.

Für die Beschichtung von Untergründen sind verschiedene Beschichtungsmittel bekannt. Neben Silikatfarben gibt es unter anderem Dispersions-Silikatfarben und Kunststoffdispersionsfarben.

Silikatfarben sind zweikomponentige Farben, die keine organischen Bestandteile enthalten. Die beiden Hauptkomponenten der Silikatfarben sind Wasserglas und ein wasserglasbeständiges Pigment. Silikatfarben werden üblicherweise unmittelbar vor dem Aufbringen durch Zusammengeben der beiden Hauptkomponenten angerührt. Daher erfordern Silikatfarben mehrere Arbeitsschritte, und ihre Verarbeitung ist allgemein schwierig und erfordert viel Erfahrung.

In den Dispersions-Silikatfarben nach DIN 18363 sind zusätzlich zum Wasserglas und dem wasserglasbeständigen Pigment noch bis zu 5 Gew.-% organische Bestandteile, bezogen auf die Gesamtmenge an Dispersions-Silikatfarbe, enthalten. Als organische Bestandteile werden vor allem Kunstharzdispersionen verwendet. Zusätzlich können auch weitere Stoffe wie Hydrophobierungsmittel enthalten sein. Durch den Einsatz von Kunstharzdispersionen ist es möglich, die Dispersions-Silikatfarben als Einkomponentensysteme anzubieten.

Sowohl Silikatfarben als auch Dispersions-Silikatfarben weisen üblicherweise einen sehr stark alkalischen pH Wert von bis zu 13 auf, der aufwändigere Vorkehrungen bezüglich des Arbeitsschutzes erfordert.

Kunststoffdispersionsfarben, auch bekannt als Dispersionsfarben, enthalten üblicherweise relativ große Mengen an organisch-chemischen Bestandteilen, insbesondere an Kunstharzen wie Polymere, insbesondere in Form von Kunstharzdispersionen. Um eine ausreichende Lagerstabilität zu gewährleisten, benötigen Dispersionsfarben üblicherweise Konservierungsmittel wie zum Beispiel Isothiazoline. Diese können jedoch insbesondere bei Allergikern Reizungen und Hautirritationen hervorrufen.

Die EP 1 297 079 B1 beschreibt eine Dispersionsfarbe enthaltend Polymerdispersion, Pigment und/oder Füllstoff, Wasserglas und Wasser. Diese Dispersionsfarbe zeichnet sich dadurch aus, dass sie keine Konservierungsmittel benötigt. Jedoch ist durch das Vorhandensein von Wasserglas zusätzlich ein anorganisches Bindemittel enthalten, wodurch die Eigenschaften der Dispersionsfarbe, insbesondere ihre Verarbeitbarkeit beeinträchtigt werden können.

Die DE 1 031 910 beschreibt eine Alkydharzemulsionsfarbe enthaltend Titandioxid, Füllstoffe, ein Alkydharz und Wasser. Dieser Farbe wird umittelbar vor der Anwendung Natriummethylsilikonat zugegeben, wodurch die modifizierte Farbe bessere Abwascheigenschaften aufweist als Alkydharzemulsionsfarben ohne Natriummethylsilikonat. Die DE 1 031 910 macht keine Aussage über den pH Wert der Alkydharzemulsionsfarbe, ihre Lagerstabilität oder über das Vorhandensein von Konservierungsmitteln. Weiterhin ist eine Alkydharzemulsionsfarbe enthaltend Natriummethylsilikonat zur Lagerung nach der DE 1 031 910 nicht vorgesehen.

Die US 2013/0170014 A1 beschreibt eine Tintenzusammensetzung, welche Kern-Schale-beschichtete Tintenpartikel, die mit mindestens einer ionisierten hydrophilen Organometallverbindung_und mindestens einer hydrophoben Organometallverbindung_beschichtet sind, Dispergiermittel und eine dielektrische Flüssigkeit umfasst.

Die JP 2005 336357 A beschreibt eine wasserbasierte Farbzusammensetzung, die ein wasserdispergierbares Harz umfasst, welches durch Emulsionspolymerisation hergestellt wurde, wobei ein Alkalimetallsilikonat als basische Verbindung in dem Harz verwendet wird.

Die WO 01/48098 A1 beschreibt ein wässriges Beschichtungsmaterial mit schmutz-und wasserabweisender Wirkung, in dem synthetische Schichtsilikate und/oder kolloidale Kieselsäure mit Primärpartikelgrößen jeweils < als 500 nm enthalten sind, wobei die kolloidal verteilten Partikel an ihren Oberflächen hydrophobiert und/oder oleophobiert sind.

Die RU 2 142 975 C1 beschreibt einen Wasserdispersionsanstrich umfassend eine 50-prozentige wässrige Acryl-Mischpolymer Emulsion oder eine Styrolacryl-Mischpolymer-Emulsion und Additive, wobei zur Reduzierung der Feuchtigkeitsaufnahme Natriummethylsilikonat enthalten ist.

Die CH 618 426 A5 beschreibt ein pigmentiertes Anstrichmittel, das aus einer Kombination aus Alkalialkylsiliconat, Siliconharz-Emulsion und Acrylsäurecopolymerisat-Dispersion besteht, um einen Anstrich mit gut deckenden diffundierenden und witterungsbeständigen Eigenschaften und guter Lagerfähigkeit zu erhalten.

Ausgehend vom voranstehend erläuterten Stand der Technik bestand eine Aufgabe der Erfindung darin, eine Dispersionsfarbe bereitzustellen, die im Wesentlichen frei von Konservierungsmitteln ist, eine gute Lagerfähigkeit aufweist und/oder gut verarbeitbar ist.

Alle oder einige dieser Aufgaben werden erfindungsgemäß durch die Dispersionsfarbe von Anspruch 1, das Verfahren nach Anspruch 12, die Verwendung nach Anspruch 14 sowie die Verwendung nach Anspruch 15 gelöst.

Vorteilhafte Ausgestaltungen der Erfindung sind in den abhängigen Ansprüchen angegeben und werden nachfolgend im Einzelnen erläutert.

Die erfindungsgemäße Dispersionsfarbe weist einen pH Wert von 10 bis 12 auf und enthält, jeweils bezogen auf das Gesamtgewicht der Dispersionsfarbe, folgende Bestandteile:
a. 1 bis 15 Gew.-% Pigment,
b. 30 bis 60 Gew.-% Füllstoff,
c. 1 bis 25 Gew.-% Polymer,
d. 0,1 bis 3,5 Gew.-% Alkalimetallalkylsilikonat,
e. 25 bis 70 Gew.-% Wasser.

Überraschend hat sich gezeigt, dass durch Kombination von 1 bis 15 Gew.-% Pigment mit 30 bis 60 Gew.-% Füllstoff, 1 bis 25 Gew.-% Polymer, 0,1 bis 3,5 Gew.-% Alkalimetallalkylsilikonat und 25 bis 70 Gew.-% Wasser in einer Dispersionsfarbe mit einem pH Wert von 10 bis 12 eine Dispersionsfarbe erhalten wird, in der die Komponenten eine ausgezeichnete Kompatibilität untereinander aufweisen. Dadurch haben Oberflächen, die mit der erfindungsgemäßen Dispersionsfarbe beschichtet wurden, ein homogeneres Aussehen. Dies äußert sich insbesondere darin, dass die Oberflächen, die mit der erfindungsgemäßen Dispersionsfarbe beschichtet wurden, sich sehr gleichmäßig durch guten Verlauf darstellen. Dadurch lässt sich die erfindungsgemäße Dispersionsfarbe hervorragend verarbeiten. Weiterhin hat sich gezeigt, dass die erfindungsgemäße Dispersionsfarbe auch ohne Konservierungsmittel nach einer Lagerzeit von mehreren Wochen keine Verfärbungen aufweist. Schließlich wurde gefunden, dass der pH Wert der erfindungsgemäßen Dispersionsfarbe über eine Lagerzeit von mehreren Wochen im Wesentlichen konstant blieb.

Ohne an eine bestimmte Theorie gebunden sein zu wollen, scheint das Alkalimetallalkylsilikonat zum Einen die Dispersionsfarbe, insbesondere den pH Wert der Dispersionsfarbe, zu stabilisieren und zum Anderen für eine gute Kompatibilität der Komponenten zu sorgen. Dabei wirkt das Alkalimetallalkylsilikonat offenbar als pH Wert Puffer. Das Vorhandensein von ausschließlich organischen Bindemitteln scheint beim pH Wert der Dispersionsfarbe eine gute Kompatibilität zwischen den Komponenten zu begünstigen. Diese Wirkung war angesichts der in der DE 1 031 910 erwähnten erforderlichen Zusätze für Alkalimetallalkylsilikonatlösungen mit Konzentrationen von bis zu 40% der Zusätze zur Erhöhung der Lagerstabilität der Alkalimetallalkylsilikonatlösungen nicht vorhersehbar.

Als Dispersionsfarben im Sinne der Erfindung kommen insbesondere Dispersions-Innenfarben, Dispersions-Außenfarben, Silikonharzfarben sowie Putze auf Dispersionsbasis, einschließlich Innen- und Außenputzen, in Betracht.

Alkalimetallalkylsilikonate gemäß der Erfindung sind insbesondere Verbindungen mit der Formel MOSi(R)(OH)₂, wobei M ein Alkalimetall und R ein Alkylrest ist. Alkalimetallalkylsilikonate können beispielsweise durch Umsetzen von Alkylsilantriol mit einem Alkalimetallhydroxid erhalten werden. Die Herstellung von Lösungen von Akalimetallalkylsilikonaten, insbesondere wässrigen Lösungen, ist beispielsweise in der DE 1 031 910 beschrieben.

In den Verbindungen MOSi(R)(OH)₂, die für das erfindungsgemäße Alkalimetallalkylsilikonat in Frage kommen, kann das Alkalimetall M insbesondere ausgewählt sein aus der Gruppe bestehen aus Lithium, Natrium, Kalium und Mischungen davon. Der Alkylrest R ist vorzugsweise ausgewählt aus der Gruppe bestehend aus Methyl-, Ethyl-, n-Propyl-, iso-Propyl-, n-Butyl-, iso-Butyl-, tert-Butyl, n-Pentyl-, iso-Pentyl-, tert-Pentyl-, Neopentyl-, Phenyl-, Aryl-, und Cyclohexyl-. Bevorzugt ist der Alkylrest Methyl-. Weiter bevorzugt ist das Alkalimetallalkylsilikonat der erfindungsgemäßen Dispersionsfarbe ausgewählt aus der Gruppe bestehend aus Litiummethylsilikonat, Natriummethylsilikonat und Kaliummethylsilikonat. Am bevorzugtesten ist das Alkalimetallalkylsilikonat Kaliummethylsilikonat. Diese Alkalimetallalkylsilikonate, insbesondere Kaliummethylsilikonat ergeben homogene Oberflächen und sind gut handhabbar.

Das Alkalimetallalkylsilikonat ist in der erfindungsgemäßen Dispersionsfarbe in einer Menge von 0,1 bis 3,5 Gew.-% enthalten, bezogen auf das Gesamtgewicht der Dispersionsfarbe. Bevorzugt enthält die erfindungsgemäße Dispersionsfarbe 0,1 bis 2 Gew.-%, insbesondere 0,3 bis 2 Gew.-% oder 0,5 bis 1,5 Gew.-%, Alkalimetallalkylsilikonat, jeweils bezogen auf das Gesamtgewicht der Dispersionsfarbe. Dispersionsfarben mit diesen Gehalten zeigen eine gute Verarbeitbarkeit und eine gute Lagerstabilität.

Erfindungsgemäß enthält die Dispersionsfarbe 1 bis 15 Gew.-% Pigment. Als Pigment kommen verschiedene Substanzen in Frage. Bevorzugt ist das Pigment ausgewählt aus der Gruppe bestehend aus Titandioxid, Eisenoxidgelb, Arylid (Monoazo), Bismutvanadat, Perinone, Rutil-Zinn-Zink, Chinacridone, Diketo-pyrrolo-pyrrol, Eisenoxidrot, Phthalocyaninblau, Dioxazin, Kobaltblau, Ultramarinblau, Phthalocyaningrün, Chromoxidgrün, Kobaltgrün, Farbruss, Eisenoxidschwarz, Pyrazolo-Chinazolon, Naphtol-AS-Monoazopigment und Mischungen davon. Gemäß einer bevorzugten Ausführungsform der Erfindung enthält die Dispersionsfarbe 3 bis 13 Gew.-% Pigment, weiter bevorzugt 5 bis 12 Gew.-% Pigment.

Gemäß einer Ausführungsform werden bevorzugt anorganische Pigmente eingesetzt. Beispiele für anorganische Pigmente sind Oxide wie Titandioxid, Eisenoxide, z.B. P.Y. 42, P.R. 101, P.Bk. 11, Chromoxidgrün, z.B. P.G. 17, Mischphasenpigmente z.B. Cobaltoxide Blau P.B. 28 und Grün P.G. 50, Bismutvanadat P.Y. 184, Rutil-Zinn-Zink P.O. 216, Silikate, z.B. Ultramarinblau P.B. 29 und Kohlenstoff, z.B. Ruß P.Bk. 7.

Gemäß einer weiteren Ausführungsform werden bevorzugt organische Pigmente eingesetzt. Beispiele für organische Pigmente sind Azopigmente, z.B. Arylidgelb (Monoazo) P.Y. 74, Polycyclische Pigmente, z.B. Chinacridone P.R. 122, Perinone P.O. 43, Pyrazolo-Chinazolon P.O. 67, Diketo-Pyrrolo-Pyrrol (DPP) P.R. 254, Dioxazine P.V. 23 und Metallkomplexpigmente, z.B. Kupferphthalocyanine Blau P.B. 15:3 und Grün P.G. 7.

Die für die Beispiele verwendeten Bezeichnungen der anorganischen und organischen Pigmente entsprechen den Generic Names des Colour Index der British Society of Dyers and Colourists.

Gemäß einer weiteren Ausführungsform werden Mischungen von anorganischen und organischen Pigmenten eingesetzt.

Durch die Verwendung der angeführten Pigmente können farbige Dispersionsfarben hergestellt werden, die im Wesentlichen das ganze Farbspektrum abdecken.

Neben den Komponenten Pigment, Polymer, Alkalimetallalkylsilikonat und Wasser enthält die erfindungsgemäße Dispersionsfarbe Füllstoff. Bevorzugt ist der Füllstoff ausgewählt aus der Gruppe bestehend aus Dolomit, Bariumsulfat, Feldspat, Quarz, Calciumcarbonat, Glimmer, Kaolin, kalziniertes Kaolin, Talkum, Diatomeenerde und Mischungen davon. Weiter bevorzugt ist der Füllstoff eine Mischung aus mindestens Calciumcarbonat und Kaolin. Derartige Füllstoffe ergeben Dispersionsfarben mit einer guten Verarbeitbarkeit.

Calciumcarbonat kann dabei in verschiedener Form, beispielsweise in Form von Kreide oder Calcit eingesetzt werden.

Praktische Versuche haben ergeben, dass Dispersionsfarben, die besonders homogene Beschichtungen ergeben, erhalten werden, wenn die Füllstoffpartikel klein sind. Die Füllstoffpartikel der erfindungsgemäßen Dispersionsfarbe weisen eine Größe von 1 bis 80 µm, bevorzugt von 1 bis 30 µm, auf. Verfahren zur Bestimmung der Partikelgröße sind dem Fachmann bekannt. Beispielsweise kann
die Partikelgröße mittels Grindometer nach DIN EN ISO 1524 bestimmt werden. Erfindungsgemäß wird die Partikelgröße nach DIN EN ISO 1524:2013-06 bestimmt. Dabei bezieht sich die Partikelgröße der Füllstoffe insbesondere auf die maximale Agglomeratgröße in der Dispersionsfarbe. Ferner kann die Partikelgröße, insbesondere die Partikelgrößenverteilung, auch mittels Transmissionselektronenmikroskopie bestimmt werden.

Der pH Wert der Dispersionsfarbe beträgt erfindungsgemäß von 10 bis 12, bevorzugt von 10,5 bis 11,5. Es wurde gefunden, dass Dispersionsfarben mit den angegebenen pH Werten auch bei einer Lagerung über mehrere Wochen keine oder nur geringfügige Verfärbungen aufweisen, selbst wenn sie im Wesentlichen frei von Konservierungsmitteln waren. Noch weiter bevorzugt beträgt der pH Wert der Dispersionsfarbe von 10,5 bis 11,4. Erfindungsgemäße Dispersionsfarben mit derartigen pH Werten hatten den zusätzlichen Vorteil, auch ohne besondere Vorkehrungen hinsichtlich des Arbeitsschutzes verwendet werden zu können.

Der pH Wert kann beispielsweise durch Zugabe von alkalischen Substanzen, auch Alkalisteller genannt, eingestellt werden. Beispiele für alkalische Substanzen sind Alkalimetallhydroxide wie Litihium-, Natrium- und/oder Kaliumhydroxid, Erdalkalimetallhydroxide wie Magnesium-, Calcium-, und/oder Bariumhydroxid, Ammoniumhydroxid, Xonotlit (6CaO·6Si₂·H₂O) und/oder Ittringit (Ca₆[Al(OH)₆]₂(SO₄ x 26 H₂O)). Das Xonotlit weist vorzugsweise ein monoklines Kristallsystem auf (Xonotlit-monoklin). Es hat sich gezeigt, dass Xonotlit und/oder Ittringit in besonders vorteilhafter Weise in Kombination mit dem in der erfindungsgemäßen Dispersionsfarbe enthaltenen Alkalimetallalkylsilikonat eingesetzt werden können. Insbesondere weisen Dispersionsfarben, die neben Alkalimetallalkylsilikonat Xonotlit und/oder Ittringit als Alkalisteller enthalten, eine erhöhte pH-Stabilität auf. Gemäß einer bevorzugten Ausführungsform der Erfindung enthält die erfindungsgemäße Dispersionsfarbe neben Alkalimetallalkylsilikonat Alkalisteller in einer Menge von 0,005 bis 3 Gew.%, insbesondere von 0,01 bis 1 Gew.%, bezogen auf die Gesamtzusammensetzung der Dispersionsfarbe. Insbesondere kann die erfindungsgemäße Dispersionsfarbe 0,005 bis 3 Gew.%, insbesondere von 0,01 bis 1 Gew.%, Xonotlit und/oder Ittringit, bezogen auf die Gesamtzusammensetzung der Dispersionsfarbe, enthalten.

Gemäß einer Ausführungsform der Erfindung bleibt der pH Wert der erfindungsgemäßen Dispersionsfarbe über einen Zeitraum von mindestens 4 Wochen, bevorzugt mindestens 8 Wochen, weiter bevorzugt mindestens 12 Wochen, noch weiter bevorzugt mindestens 16 Wochen, noch weiter bevorzugt mindestens 20 Wochen, im Wesentlichen konstant.

Erfindungsgemäß enthält die Dispersionsfarbe 1 bis 25 Gew.-% Polymer, bezogen auf das Gesamtgewicht der Dispersionsfarbe. Bevorzugt enthält die Dispersionsfarbe 2 bis 23 Gew.-%, weiter bevorzugt 4 bis 20 Gew.-%, Polymer jeweils bezogen auf das Gesamtgewicht der Dispersionsfarbe. Die Angaben bezüglich des Gehalts an Polymer in der Dispersionsfarbe beziehen sich jeweils auf das Polymer als Feststoffanteil. Bevorzugt wird das Polymer bei der Herstellung einer Dispersionsfarbe jedoch in Form einer Dispersion, insbesondere einer wässrigen Dispersion, zugegeben. Vorteilhafterweise enthalten diese Polymerdispersionen, insbesondere die wässrigen Polymerdispersionen, 40 bis 70 Gew.-%, bevorzugt 45 bis 60 Gew.-%, weiter bevorzugt 45 bis 55 Gew.-%, Polymer. Wird das Polymer als wässrige Polymerdispersion zugegeben, wird das Wasser der Polymerdispersion als Teil des gesamten Wassergehalts der Dispersionsfarbe gerechnet. Dispersionsfarben enthaltend Polymer in diesen Mengen haben gute Verarbeitungseigenschaften gezeigt.

Als Polymer der Dispersionsfarbe kommen verschiedene Polymere in Frage. Bevorzugt enthält das Polymer der erfindungsgemäßen Dispersionsfarbe mindestens ein Polymer und/oder Copolymer auf Basis von mindestens einem Monomer ausgewählt aus der Gruppe bestehend aus Acrylsäure, Acrylsäurederivate, Acrylsäureester, Methacrylsäure, Methacrylsäurederivate, Methacrylsäureester, Styrol, Styrolderivate, N-Vinylpyrrolidon, Acrylnitril, Vinylacetat, Vinylpropionat, ethylenisch ungesättigte Carbonsäuren, ethylenisch ungesättigte Carbonsäureester, ethylenisch ungesättigte Carbonsäureanhydride, ethylenisch ungesättigte Carbonsäureamide und Carbonsäurevinylester. Besonders bevorzugt enthält das Polymer der Dispersionsfarbe mindestens ein Polymer auf Basis von Acrylsäurederivaten und/oder Styrol. Bei Verwendung von Acrylsäureestern und/oder Methacrylsäureestern ist es bevorzugt, dass der Alkoholrest 1 bis 12 Kohlenstoffatome enthält. Der Alkoholrest kann ferner verzweigt oder unverzweigt sein. Gemäß einer bevorzugten Ausführungsform besteht das Polymer der Dispersionsfarbe aus mindestens einem der vorgenannten Polymere und/oder Copolymere.

Die erfindungsgemäße Dispersionsfarbe kann zudem als weitere Additive Dispergier-, Netz-, Verdickungsmittel, Stabilisatoren, Entschäumer und/oder Hydrophobierungsmittel enthalten.

Beispiele für Verdickungsmittel sind Alkoholalkoxylate, Ethylenoxid-Propylenoxid-Copolymere, Maleinsäureanhydrid-Diisobutylen-Copolymere, Polyacryl- und Polymethacrylsäure und deren Salze, Methylcellulosen, Carboxymethylcellulosen, Hydroxymethylcellulosen, Polyurethane, Alkalimetallphosphate und Salze modifizierter Phosphorsäuren, sowie deren Mischungen.

Beispiele für Entschäumer sind Polyglykole, Triglyceride, Polysiloxan-Polyether-Copolymere und Silikonöle.

Beispiele für Hydrophobiermittel sind insbesondere oligomere und polymere Siloxane und Silikonharze.

Gemäß einer bevorzugten Ausführungsform ist die erfindungsgemäße Dispersionsfarbe im Wesentlichen frei von Konservierungsmitteln, insbesondere von Isothiazolinen.

Die Erfindung stellt ferner ein Verfahren zur Herstellung der erfindungsgemäßen Dispersionsfarbe bereit, umfassend die Schritte
a. Bereitstellen einer Zusammensetzung enthaltend, jeweils bezogen auf das Gesamtgewicht der Dispersionsfarbe,
   i. 1 bis 15 Gew.-% Pigment,
   ii. 30 bis 60 Gew.-% Füllstoff,
   iii. 1 bis 25 Gew.-% Polymer,
   iv. 0,1 bis 3,5 Gew.-% Alkalimetallalkylsilikonat,
   v. 25 bis 70 Gew.-% Wasser,
b. Dispergieren der in a. genannten Komponenten,
c. Einstellen des pH Wertes auf einen Wert von 10 bis 12,
wobei die Füllstoffpartikel eine Größe von 1 bis 80 µm aufweisen, gemessen nach DIN EN ISO 1524:2013-06.

Die angeführten Schritte können in beliebiger Reihenfolge durchgeführt werden, vorzugsweise werden sie in der angegebenen Reihenfolge durchgeführt.

Das im Zusammenhang mit der erfindungsgemäßen Dispersionsfarbe zum Alkalimetallalkylsilikonat Gesagte gilt gleichermaßen auch für das Alkalimetallalkylsilikonat des erfindungsgemäßen Verfahrens.

Das im Zusammenhang mit der erfindungsgemäßen Dispersionsfarbe zum Pigment Gesagte gilt gleichermaßen auch für das Pigment des erfindungsgemäßen Verfahrens.

Das im Zusammenhang mit der erfindungsgemäßen Dispersionsfarbe zum Füllstoff Gesagte gilt gleichermaßen auch für den Füllstoff des erfindungsgemäßen Verfahrens.

Das im Zusammenhang mit der erfindungsgemäßen Dispersionsfarbe zum pH Wert sowie zur alkalischen Substanz Gesagte gilt gleichermaßen auch für den pH Wert sowie für die alkalische Substanz des erfindungsgemäßen Verfahrens.

Das im Zusammenhang mit der erfindungsgemäßen Dispersionsfarbe zum Polymer Gesagte gilt gleichermaßen auch für das Polymer des erfindungsgemäßen Verfahrens.

Die erfindungsgemäße Dispersionsfarbe ist für verschiedene Verwendungen geeignet. Insbesondere eignet sie sich für die Verwendung im Innen- und/oder Außenbereich.

Die Erfindung betrifft ebenfalls die Verwendung von Alkalimetallalkylsilikonaten, insbesondere von Kaliummethylsilikonat, zur Stabilisierung von Dispersionsfarben.

Die Erfindung wird im Folgenden durch Beispiele näher erläutert, die jedoch nur der Veranschaulichung dienen und nicht limitierend sind.

### BEISPIELE

Dispersionsfarben mit den folgenden, in Tabelle 1 wiedergegebenen Formulierungen wurden hergestellt durch Mischen der in Tabelle 1 angegebenen Bestandteile, dosierte Angaben jeweils in Gew.-%.

**Tabelle 1**

| **Bestandteil** | **Formulierung A** | **Formulierung B** |
|---|---|---|
| Titandioxid | 6 | 11 |
| Styrolacrylat (50 Gew.-% in Wasser) | 19 | 11 |
| Kaliummethylsilikonat | 1 | 1,5 |
| Calciumcarbonat | 21,7 | 32,5 |
| Kaolin | 20,8 | 8 |
| Alkalische Verbindung | 0,05 | 0,5 |
| Entschäumer | 0,2 | 0,28 |
| Verdicker | 0,5 | 0,75 |
| Netzmittel | 0,46 | 0,3 |
| Wasser | 30,29 | 34,17 |
| pH Wert | 11,3 | 11,4 |

Die Formulierungen A und B zeigten eine Lagerstabilität von mehr als 6 Monaten ohne Verfärbungen und ließen sich gut verarbeiten. Insbesondere zeigten die Formulierungen eine gute Verarbeitbarkeit und ergaben nach dem Auftragen Oberflächen mit einem homogenen Gesamteindruck. Der pH Wert betrug für Formulierung A nach 6 Monaten 11,3, für Formulierung B 11,4.

## Patentansprüche

1. Dispersionsfarbe enthaltend, jeweils bezogen auf das Gesamtgewicht der Dispersionsfarbe,
a. 1 bis 15 Gew.-% Pigment,
b. 30 bis 60 Gew.-% Füllstoff,
c. 1 bis 25 Gew.-% Polymer,
d. 0,1 bis 3,5 Gew.-% Alkalimetallalkylsilikonat,
e. 25 bis 70 Gew.-% Wasser,
wobei der pH Wert der Dispersionsfarbe von 10 bis 12 beträgt, und
wobei die Füllstoffpartikel bezogen auf die maximale Agglomeratgrösse in der Dispersionsfarbe eine Größe von 1 bis 80 µm aufweisen, gemessen nach DIN EN ISO 1524:2013-06.

2. Dispersionsfarbe nach Anspruch 1, **dadurch gekennzeichnet, dass** sie 0,1 bis 2 Gew.-%, insbesondere 0,3 bis 2 Gew.-% oder 0,5 bis 1,5 Gew.-%, jeweils bezogen auf das Gesamtgewicht der Dispersionsfarbe, Alkalimetallalkylsilikonat enthält.

3. Dispersionsfarbe nach Anspruch 1 oder 2, **dadurch gekennzeichnet, dass** das Alkalimetallalkylsilikonat Kaliummethylsilikonat ist.

4. Dispersionsfarbe nach einem der vorstehenden Ansprüche, **dadurch gekennzeichnet, dass** das Pigment ausgewählt ist aus der Gruppe bestehend aus Titandioxid, Eisenoxidgelb, Arylid (Monoazo), Bismutvanadat, Perinone, Rutil-Zinn-Zink, Chinacridone, Diketo-pyrrolo-pyrrol, Eisenoxidrot, Phthalocyaninblau, Dioxazin, Kobaltblau, Ultramarinblau, Phthalocyaningrün, Chromoxidgrün, Kobaltgrün, Farbruss, Eisenoxidschwarz, Pyrazolo-Chinazolon, Naphtol-AS-Monoazopigment und Mischungen davon.

5. Dispersionsfarbe nach einem der vorstehenden Ansprüche, **dadurch gekennzeichnet, dass** der Füllstoff ausgewählt ist aus der Gruppe bestehend aus Dolomit, Bariumsulfat, Feldspat, Quarz, Calciumcarbonat, Glimmer, Kaolin, kalziniertes Kaolin, Talkum, Diatomeenerde und Mischungen davon.

6. Dispersionsfarbe nach einem der vorstehenden Ansprüche, **dadurch gekennzeichnet, dass** der Füllstoff eine Mischung aus mindestens Calciumcarbonat und Kaolin ist.

7. Dispersionsfarbe nach einem der vorstehenden Ansprüche, **dadurch gekennzeichnet, dass** der pH Wert der Dispersionsfarbe von 10,5 bis 11,5, insbesondere von 10,5 bis 11,4, beträgt.

8. Dispersionsfarbe nach einem der vorstehenden Ansprüche, **dadurch gekennzeichnet, dass** der pH Wert der Dispersionsfarbe über einen Zeitraum von mindestens 4 Wochen, insbesondere mindestens 8 Wochen oder mindestens 12 Wochen oder mindestens 16 Wochen oder mindestens 20 Wochen, im Wesentlichen konstant bleibt.

9. Dispersionsfarbe nach einem der vorstehenden Ansprüche, **dadurch gekennzeichnet, dass** die Dispersionsfarbe 2 bis 23 Gew.-%, insbesondere 4 bis 20 Gew.-%, Polymer enthält, jeweils bezogen auf das Gesamtgewicht der Dispersionsfarbe.

10. Dispersionsfarbe nach einem der vorstehenden Ansprüche, **dadurch gekennzeichnet, dass** das Polymer mindestens ein Polymer und/oder Copolymer auf Basis von mindestens einem Monomer ausgewählt aus der Gruppe bestehend aus Acrylsäure, Acrylsäurederivate, Acrylsäureester, Methacrylsäure, Methacrylsäurederivate, Methacrylsäureester, Styrol, Styrolderivate, N-Vinylpyrrolidon, Acrylnitril, Vinylacetat, Vinylpropionat, ethylenisch ungesättigte Carbonsäuren, ethylenisch ungesättigte Carbonsäureester, ethylenisch ungesättigte Carbonsäureanhydride, ethylenisch ungesättigte Carbonsäureamide und Carbonsäurevinylester, enthält.

11. Dispersionsfarbe nach einem der vorstehenden Ansprüche, **dadurch gekennzeichnet, dass** die Dispersionsfarbe als weitere Additive Dispergier-, Netz-, Verdickungsmittel, Stabilisatoren, Entschäumer und/oder Hydrophobierungsmittel enthält.

12. Verfahren zur Herstellung einer Dispersionsfarbe nach einem der Ansprüche 1 bis 11, umfassend
a. Bereitstellen einer Zusammensetzung enthaltend, jeweils bezogen auf das Gesamtgewicht der Zusammensetzung,
i. 1 bis 15 Gew.-% Pigment,
ii. 30 bis 60 Gew.-% Füllstoff,
iii. 1 bis 25 Gew.-% Polymer,
iv. 0,1 bis 3,5 Gew.-% Alkalimetallalkylsilikonat,
v. 25 bis 70 Gew.-% Wasser,
b. Dispergieren der in a. genannten Komponenten,
c. Einstellen des pH Wertes auf einen Wert von 10 bis 12,
wobei die Füllstoffpartikel bezogen auf die maximale Agglomeratgrösse in der Dispersionsfarbe eine Größe von 1 bis 80 µm aufweisen, gemessen nach DIN EN ISO 1524:2013-06.

13. Verfahren nach Anspruch 12, **dadurch gekennzeichnet, dass** die Zusammensetzung 0,1 bis 2 Gew.-%, insbesondere 0,3 bis 2 Gew.-% oder 0,5 bis 1,5 Gew.-%, jeweils bezogen auf das Gesamtgewicht der Zusammensetzung, Alkalimetallalkylsilikonat enthält und/oder dass das Alkalimetallalkylsilikonat Kaliummethylsilikonat ist und/oder dass das Pigment ausgewählt ist aus der Gruppe bestehend aus Titandioxid, Eisenoxidgelb, Arylid (Monoazo), Bismutvanadat, Perinone, Rutil-Zinn-Zink, Chinacridone, Diketo-pyrrolo-pyrrol, Eisenoxidrot, Phthalocyaninblau, Dioxazin, Kobaltblau, Ultramarinblau, Phthalocyaningrün, Chromoxidgrün, Kobaltgrün, Farbruss, Eisenoxidschwarz, Pyrazolo-Chinazolon, Naphtol-AS-Monoazopigment und Mischungen davon und/oder dass der Füllstoff durch mindestens ein Merkmal der Ansprüche 5 und 6 charakterisiert ist und/oder dass der pH Wert der Dispersionsfarbe von 10,5 bis 11,5, insbesondere von 10,5 bis 11,4, beträgt und/oder dass der pH Wert der Dispersionsfarbe über einen Zeitraum von mindestens 4 Wochen, insbesondere mindestens 8 Wochen oder mindestens 12 Wochen oder mindestens 16 Wochen oder mindestens 20 Wochen, im Wesentlichen konstant bleibt und/oder dass die Zusammensetzung 2 bis 23 Gew.-%, insbesondere 4 bis 20 Gew.-%, Polymer enthält, jeweils bezogen auf das Gesamtgewicht der Zusammensetzung und/oder dass das Polymer mindestens ein Polymer und/oder Copolymer auf Basis von mindestens einem Monomer ausgewählt aus der Gruppe bestehend aus Acrylsäure, Acrylsäurederivate, Acrylsäureester, Methacrylsäure, Methacrylsäurederivate, Methacrylsäureester, Styrol, Styrolderivate, N-Vinylpyrrolidon, Acrylnitril, Vinylacetat, Vinylpropionat, ethylenisch ungesättigte Carbonsäuren, ethylenisch ungesättigte Carbonsäureester, ethylenisch ungesättigte Carbonsäureanhydride, ethylenisch ungesättigte Carbonsäureamide und Carbonsäurevinylester, enthält und/oder dass die Zusammensetzung als weitere Additive Dispergier-, Netz-, Verdickungsmittel, Stabilisatoren, Entschäumer und/oder Hydrophobierungsmittel enthält.

14. Verwendung einer Dispersionsfarbe nach einem der Ansprüche 1 bis 11 für den Innen- und/oder Außenbereich.

15. Verwendung von Alkalimetallalkylsilikonaten zur Stabilisierung von Dispersionsfarben nach einem der Ansprüche 1 bis 11.

## Claims

1. Emulsion paint containing, in each case based on the total weight of the emulsion paint,
a. 1 to 15 wt.% pigment,
b. 30 to 60 wt.% filler,
c. 1 to 25 wt.% polymer,
d. 0.1 to 3.5 wt.% alkali metal alkyl siliconate,
e. 25 to 70 wt.% water,
wherein the pH of the emulsion paint is from 10 to 12, and
wherein the filler particles have a size of 1 to 80 µm, measured according to DIN EN ISO 1524:2013-06, based on the maximum agglomerate size in the emulsion paint.

2. Emulsion paint according to claim 1, **characterized in that** it contains 0.1 to 2 wt.%, in particular 0.3 to 2 wt.% or 0.5 to 1.5 wt.%, alkali metal alkyl siliconate, in each case based on the total weight of the emulsion paint.

3. Emulsion paint according to either claim 1 or claim 2, **characterized in that** the alkali metal alkyl siliconate is potassium methyl siliconate.

4. Emulsion paint according to any of the preceding claims,
**characterized in that** the pigment is selected from the group consisting of titanium dioxide, iron oxide yellow, arylide (monoazo), bismuth vanadate, perinones, rutile tin zinc, quinacridones, diketopyrrolopyrrole, iron oxide red, phthalocyanine blue, dioxazine, cobalt blue, ultramarine blue, phthalocyanine green, chromium oxide green, cobalt green, carbon black, iron oxide black, pyrazoloquinazolone, naphthol AS monoazo pigment, and mixtures thereof.

5. Emulsion paint according to any of the preceding claims,
**characterized in that** the filler is selected from the group consisting of dolomite, barium sulfate, feldspar, quartz, calcium carbonate, mica, kaolin, calcined kaolin, talc, diatomaceous earth, and mixtures thereof.

6. Emulsion paint according to any of the preceding claims,
**characterized in that** the filler is a mixture of at least calcium carbonate and kaolin.

7. Emulsion paint according to any of the preceding claims,
**characterized in that** the pH of the emulsion paint is from 10.5 to 11.5, in particular from 10.5 to 11.4.

8. Emulsion paint according to any of the preceding claims, **characterized in that** the pH of the emulsion paint remains substantially constant over a period of at least 4 weeks, in particular at least 8 weeks or at least 12 weeks or at least 16 weeks or at least 20 weeks.

9. Emulsion paint according to any of the preceding claims,
**characterized in that** the emulsion paint contains 2 to 23 wt.%, in particular 4 to 20 wt.%, polymer, in each case based on the total weight of the emulsion paint.

10. Emulsion paint according to any of the preceding claims,
**characterized in that** the polymer contains at least one polymer and/or copolymer based on at least one monomer selected from the group consisting of acrylic acid, acrylic acid derivatives, acrylic acid esters, methacrylic acid, methacrylic acid derivatives, methacrylic acid esters, styrene, styrene derivatives, N-vinylpyrrolidone, acrylonitrile, vinyl acetate, vinyl propionate, ethylenically unsaturated carboxylic acids, ethylenically unsaturated carboxylic acid esters, ethylenically unsaturated carboxylic acid anhydrides, ethylenically unsaturated carboxylic acid amides and carboxylic acid vinyl esters.

11. Emulsion paint according to any of the preceding claims,
**characterized in that** the emulsion paint contains dispersants, wetting agents, thickeners, stabilizers, defoamers and/or hydrophobing agents as further additives.

12. Method for producing an emulsion paint according to any of claims 1 to 11, comprising
a. providing a composition containing, in each case based on the total weight of the composition,
i. 1 to 15 wt.% pigment,
ii. 30 to 60 wt.% filler,
iii. 1 to 25 wt.% polymer,
iv. 0.1 to 3.5 wt.% alkali metal alkyl siliconate,
v. 25 to 70 wt.% water,
b. dispersing the components mentioned in a.,
c. adjusting the pH to a value of 10 to 12, wherein the filler particles have a size of 1 to 80 µm, measured according to DIN EN ISO 1524:2013-06, based on the maximum agglomerate size in the emulsion paint.

13. Method according to claim 12, **characterized in that** the composition contains 0.1 to 2 wt.%, in particular 0.3 to 2 wt.% or 0.5 to 1.5 wt.%, alkali metal alkyl siliconate, in each case based on the total weight of the composition, and/or in that the alkali metal alkyl siliconate is potassium methyl siliconate and/or **in that** the pigment is selected from the group consisting of titanium dioxide, iron oxide yellow, arylide (monoazo), bismuth vanadate, perinones, rutile tin zinc, quinacridones, diketopyrrolopyrrole, iron oxide red, phthalocyanine blue, dioxazine, cobalt blue, ultramarine blue, phthalocyanine green, chromium oxide green, cobalt green, carbon black, iron oxide black, pyrazoloquinazolone, naphthol AS monoazo pigment, and mixtures thereof and/or **in that** the filler is **characterized by** at least one feature of claims 5 and 6 and/or in that the pH of the emulsion paint is from 10.5 to 11.5, in particular from 10.5 to 11.4 and/or in that the pH of the emulsion paint remains substantially constant over a period of at least 4 weeks, in particular at least 8 weeks or at least 12 weeks or at least 16 weeks or at least 20 weeks, and/or in that the composition contains 2 to 23 wt.%, in particular 4 to 20 wt.%, polymer, in each case based on the total weight of the composition, and/or in that the polymer contains at least one polymer and/or copolymer based on at least one monomer selected from the group consisting of acrylic acid, acrylic acid derivatives, acrylic acid esters, methacrylic acid, methacrylic acid derivatives, methacrylic acid esters, styrene, styrene derivatives, N-vinylpyrrolidone, acrylonitrile, vinyl acetate, vinyl propionate, ethylenically unsaturated carboxylic acids, ethylenically unsaturated carboxylic acid esters, ethylenically unsaturated carboxylic acid anhydrides, ethylenically unsaturated carboxylic acid amides and carboxylic acid vinyl esters, and/or in that the composition contains dispersants, wetting agents, thickeners, stabilizers, defoamers and/or hydrophobing agents as further additives.

14. Use of an emulsion paint according to any of claims 1 to 11 for indoor and/or outdoor use.

15. Use of alkali metal alkyl siliconates for stabilizing emulsion paints according to any of claims 1 to 11.

## Revendications

1. Peinture de dispersion comprenant, respectivement par rapport au poids total de la peinture de dispersion,
a. 1 à 15 % en poids de pigment,
b. 30 à 60 % en poids de charge,
c. 1 à 25 % en poids de polymère,
d. 0,1 à 3,5 % en poids d'alkylsiliconate de métal alcalin,
e. 25 à 70 % en poids d'eau,
le pH de la peinture de dispersion étant de 10 à 12, et
dans laquelle les particules de charge présentent, par rapport à la taille maximale d'agglomérat dans la peinture de dispersion, une taille allant de 1 à 80 µm, mesurée selon la norme DIN EN ISO 1524:2013-06.

2. Peinture de dispersion selon la revendication 1,
**caractérisée en ce qu**'elle contient 0,1 à 2 % en poids, en particulier 0,3 à 2 % en poids ou 0,5 à 1,5 % en poids, respectivement par rapport au poids total de la peinture de dispersion, d'alkylsiliconate de métal alcalin.

3. Peinture de dispersion selon la revendication 1 ou 2, **caractérisée en ce que** l'alkylsiliconate de métal alcalin est le méthylsiliconate de potassium.

4. Peinture de dispersion selon l'une des revendications précédentes, **caractérisée en ce que** le pigment est choisi dans le groupe constitué par le dioxyde de titane, l'oxyde de fer jaune, l'arylide (monoazoïque), le vanadate de bismuth, les périnones, le rutile-étain-zinc, les quinacridones, le dikéto-pyrrolo-pyrrole, l'oxyde de fer rouge, le bleu de phtalocyanine, le dioxazine, le bleu de cobalt, le bleu outremer, le vert de phtalocyanine, le vert d'oxyde de chrome, le vert de cobalt, le noir de carbone, l'oxyde de fer noir, le pyrazolo quinazolone, le pigment monoazoïque naphtol AS, et leurs mélanges.

5. Peinture de dispersion selon l'une des revendications précédentes, **caractérisée en ce que** la charge est choisie dans le groupe constitué par la dolomite, le sulfate de baryum, le feldspath, le quartz, le carbonate de calcium, le mica, le kaolin, le kaolin calciné, le talc, la terre de diatomée et leurs mélanges.

6. Peinture de dispersion selon l'une des revendications précédentes, **caractérisée en ce que** la charge est un mélange d'au moins du carbonate de calcium et du kaolin.

7. Peinture de dispersion selon l'une des revendications précédentes, **caractérisée en ce que** le pH de la peinture de dispersion est de 10,5 à 11,5, en particulier de 10,5 à 11,4.

8. Peinture de dispersion selon l'une des revendications précédentes, **caractérisée en ce que** le pH de la peinture de dispersion reste sensiblement constant sur une période d'au moins 4 semaines, en particulier d'au moins 8 semaines ou d'au moins 12 semaines ou d'au moins 16 semaines ou d'au moins 20 semaines.

9. Peinture de dispersion selon l'une des revendications précédentes, **caractérisée en ce que** la peinture de dispersion contient 2 à 23 % en poids, en particulier 4 à 20 % en poids, de polymère, respectivement par rapport au poids total de la peinture de dispersion.

10. Peinture de dispersion selon l'une des revendications précédentes, **caractérisée en ce que** le polymère contient au moins un polymère et/ou un copolymère à base d'au moins un monomère choisi dans le groupe constitué par l'acide acrylique, les dérivés d'acide acrylique, les esters d'acide acrylique, l'acide méthacrylique, les dérivés d'acide méthacrylique, les esters d'acide méthacrylique, le styrène, les dérivés de styrène, le N-vinylpyrrolidone, l'acrylonitrile, l'acétate de vinyle, le propionate de vinyle, les acides carboxyliques à insaturation éthylénique, les esters d'acide carboxylique à insaturation éthylénique, les anhydrides d'acide carboxylique à insaturation éthylénique, les amides d'acide carboxylique à insaturation éthylénique et les esters vinyliques d'acide carboxylique.

11. Peinture de dispersion selon l'une des revendications précédentes, **caractérisée en ce que** la peinture de dispersion contient, comme autres additifs, des agents dispersants, mouillants, épaississants, des stabilisants, des agents antimousse et/ou hydrofuges.

12. Procédé de fabrication d'une peinture de dispersion selon l'une des revendications 1 à 11, comprenant
a. la mise à disposition d'une composition comprenant, respectivement par rapport au poids total de la composition,
i. 1 à 15 % en poids de pigment,
ii. 30 à 60 % en poids de charge,
iii. 1 à 25 % en poids de polymère,
iv. 0,1 à 3,5 % en poids d'alkylsiliconate de métal alcalin,
v. 25 à 70 % en poids d'eau,
b. la dispersion des constituants mentionnés à l'étape a.,
c. l'ajustement du pH à une valeur de 10 à 12, dans lequel les particules de charge présentent, par rapport à la taille maximale d'agglomérat dans la peinture de dispersion, une taille allant de 1 à 80 µm, mesurée selon la norme DIN EN ISO 1524:2013-06.

13. Procédé selon la revendication 12, **caractérisé en ce que** la composition contient 0,1 à 2 % en poids, en particulier 0,3 à 2 % en poids ou 0,5 à 1,5 % en poids, respectivement par rapport au poids total de la composition, d'un alkylsiliconate de métal alcalin **et/ou que** l'alkylsiliconate de métal alcalin est le méthylsiliconate de potassium **et/ou que** le pigment est choisi dans le groupe constitué par le dioxyde de titane, l'oxyde de fer jaune, l'arylide (monoazoïque), le vanadate de bismuth, les périnones, le rutile-étain-zinc, les quinacridones, le dikéto-pyrrolo-pyrrole, l'oxyde de fer rouge, le bleu de phtalocyanine, le dioxazine, le bleu de cobalt, le bleu outremer, le vert de phtalocyanine, le vert d'oxyde de chrome, le vert de cobalt, le noir de carbone, l'oxyde de fer noir, le pyrazolo quinazolone, le pigment monoazoïque naphtol AS, et leurs mélanges **et/ou que** la charge est **caractérisée par** au moins une caractéristique des revendications 5 et 6 **et/ou que** le pH de la peinture de dispersion est de 10,5 à 11,5, en particulier de 10,5 à 11,4, **et/ou que** le pH de la peinture de dispersion reste sensiblement constant sur une période d'au moins 4 semaines, en particulier d'au moins 8 semaines ou d'au moins 12 semaines ou d'au moins 16 semaines ou d'au moins 20 semaines, **et/ou que** la composition contient 2 à 23 % en poids, en particulier 4 à 20 % en poids, de polymère, respectivement par rapport au poids total de la composition, **et/ou que** le polymère contient au moins un polymère et/ou un copolymère à base d'au moins un monomère choisi dans le groupe constitué par l'acide acrylique, les dérivés d'acide acrylique, les esters d'acide acrylique, l'acide méthacrylique, les dérivés d'acide méthacrylique, les esters d'acide méthacrylique, le styrène, les dérivés de styrène, le N-vinylpyrrolidone, l'acrylonitrile, l'acétate de vinyle, le propionate de vinyle, les acides carboxyliques à insaturation éthylénique, les esters d'acide carboxylique à insaturation éthylénique, les anhydrides d'acide carboxylique à insaturation éthylénique, les amides d'acide carboxylique à insaturation éthylénique et les esters vinyliques d'acide carboxylique, **et/ou que** la composition contient, comme autres additifs, des agents dispersants, mouillants, épaississants, des stabilisants, des agents antimousse et/ou hydrofuges.

14. Utilisation d'une peinture de dispersion selon l'une des revendications 1 à 11 pour une zone intérieure et/ou extérieure.

15. Utilisation d'alkylsiliconates de métal alcalin pour stabiliser des peintures de dispersion selon l'une des revendications précédentes 1 à 11.
